Europäisches Patentamt

European Patent Office

Office européen des brevets

(19)

(11) Numéro de publication: **O O13 227**
**B1**

(12) · **FASCICULE DE BREVET EUROPEEN**

(45) Date de publication du fascicule de brevet: **25.11.81**

(21) Numéro de dépôt: **79401042.1**

(22) Date de dépôt: **19.12.79**

(51) Int. Cl.³: **F 16 F 9/50, F 16 F 9/20**
**//F16L3/20**

(54) **Dispositif hydraulique de freinage pour charge soumise à des chocs et vibrations.**

(30) Priorité: **29.12.78 FR 7836808**

(43) Date de publication de la demande:
**09.07.80 Bulletin 80/14**

(45) Mention de la délivrance du brevet:
**25.11.81 Bulletin 81/47**

(84) Etats Contractants Désignés:
**DE GB IT**

(56) Documents cités:
**FR - A - 1 326 586**
**FR - A - 2 118 635**
**FR - A - 2 286 981**
**GB - A - 1 317 253**

(73) Titulaire: **MESSIER-HISPANO-BUGATTI (S.A)**
**5, rue Louis Lejeune**
**F-92120 Montrouge (FR)**

(72) Inventeur: **Masclet, Jean**
**11 Boulevard Davout**
**F-75020 Paris (FR)**
Inventeur: **Turiot, André**
**77 Ave de l'Escadrille Normandie-Niemen**
**F-91390 Morsang S/Orge (FR)**

(74) Mandataire: **Flavenot, Bernard**
**S.E.D.I.C. 21, rue Molière**
**F-92120 Montrouge (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 013 227 B1

Dispositif hydraulique de freinage pour charge soumise à des chocs et vibrations

La présente invention a pour objet un dispositif hydraulique de freinage pour charge soumise à des chocs et vibrations.

On sait que dans les installations comportant des charges suspendues de toute nature, telles que des tuyauteries, dans lesquelles circulent des fluides à haute température, comme il s'en trouve, par exemple, dans les centrales électriques, pour canaliser la vapeur, des charges doivent être suspendues ou articulées sur des ouvrages de génie civil pour permettre des déformations lentes, par exemple d'origine thermique, de ces charges ou d'éléments qui leur sont adjacents. De plus, il est nécessaire de stabiliser dynamiquement ces charges, afin de les protéger, ainsi que leurs éléments adjacents, lorsqu'il se produit une explosion, une rupture d'éléments, voire un séisme.

Dans ce but, il a déjà été développé des dispositifs destinés à etre interposés entre une charge suspendue ou articulée et un support solide, et pouvant s'allonger ou se raccourcir en n'opposant que de très faibles efforts lors de mouvements lents, dûs par exemple aux déformations ou dilatations thermiques de la charge ou d'éléments adjacents à la charge, et opposant des efforts considérables lors de sollicitations extérieures brusques, et pouvant être alternées, afin de stabiliser dynamiquement la charge. Il est déjà connu, notamment des brevets français n° 2 118 635 et n° 2 286 981 ainsi que du brevet britannique 1 317 253, des dispositifs hydrauliques de ce type, comprenant un cylindre susceptible d'être solidarisé à l'un des éléments que constituent la charge et le support, et traversé avec étanchéité par une tige principale coulissante susceptible d'être solidarisée à l'autre des éléments, charge ou support, et dont la partie interne au cylindre présente une surépaisseur conformée en piston principal, coulissant avec étanchéité dans ie cylindre et définissant avec ce dernier deux chambres remplies de fluide hydraulique pouvant circuler de l'une à l'autre des deux chambres au travers de deux valves, par exemple à clapet, ne freinant pas la circulation du fluide à faible vitesse, et dont l'une ou l'autre, selon le sens de déplacement de la tige principale dans le cylindre, assure le freinage de la circulation du fluide, par laminage de ce dernier, pour limiter la vitesse de déplacement de la tige dans le cylindre, sous l'action d'efforts anormalement élevés sur la charge, et opposer une réaction de blocage aux déplacements se développant sous l'effet d'accélérations importantes, à la suite de chocs ou vibrations. Compte tenu de la possibilité de fuites hydrauliques non négligeables du fait, d'une part, de l'emploi dans ces dispositifs, d'une pluralité de joints d'étanchéité dynamiques, et, d'autre part, des effets de l'environnement du dispositif sur ces joints, en particulier dans le cadre d'application dans les centrales nucléaires, où les joints sont portés à des températures importantes et sont exposés à des radiations, on a associé à ces dispositifs hydrauliques de freinage connus, du type télescopique et à double effet, des équipements externes destinés à compenser les fuites, et à indiquer si des fuites se sont effectivement produites. De même, il est indiqué de prévoir un accumulateur des dilatations du fluide hydraulique du dispositif de freinage, lequel est amené, en service, à subir des variations importantes de température.

Dans le brevet britannique n° 1 317 253, il est suggéré de prévoir que la tige principale soit creuse, et renferme un réservoir de fluide hydraulique en communication avec chacune des chambres du cylindre, au travers de l'une des valves à clapet, qui sont disposées dans la surépaisseur de la tige principale, un piston secondaire, monté coulissant dans la tige principale, et sollicité par des moyens élastiques, prenant appui contre la tige principale pour assurer la pressurisation du réservoir, lequel peut ainsi simultanément faire office d'accumulateur des dilatations du fluide hydraulique.

Mais, dans ce brevet britannique n° 1 317 253, les deux valves à clapet sont disposées axialement en sens inverse et dans le prolongement l'une de l'autre à l'intérieur d'une fourrure logée dans un alésage axial pratiqué dans le piston, de même que deux valves de surcharge, logées dans une seconde fourrure, reçue dans le piston, et entre lesquelles débouche une extrémité d'un canal radial dont l'autre extrémité débouche entre les deux valves à clapet. Compte tenu des diamètres que présentent des fourrures destinées à loger de telles valves, l'ensemble des valves pourra être logé dans la surépaisseur de la tige si celle-ci, réalisée d'une seule pièce, présente un faible diamètre, ce qui est défavorable pour la tenue des efforts. Si la tige présente un diamètre acceptable à cet effet, elle devra alors être réalisée en deux parties, une partie au moins étant rapportée sur l'un des côtés de la surépaisseur, et utilisée, par exemple, avec profit pour retenir les valves dans la surépaisseur de la tige.

Dans les deux cas, un tel dispositif présente l'inconvénient que le volume utilisable à l'intérieur de la tige, pour loger le réservoir de compensation des fuites, et d'accumulation des dilatations, est trop faible, ce qui oblige à retenir une solution avec une tige longue, et un dispositif encore d'autant plus long qu'il devra comprendre un indicateur témoignant des longues courses possibles du piston secondaire dans la tige.

Le problème à la base de l'invention est de remédier à cet inconvénient, au moyen d'un dispositif dans lequel on pourra disposer de la majeure partie du volume interne de la tige principale, sans que celle-ci ait un diamètre par trop réduit, pour loger un réservoir hydraulique et des moyens témoignant de l'état de remplissage de ce réservoir.

A cet effet, un dispositif du type de celui suggéré par le brevet britannique n° 1 317 253, se caractérisé en ce que, dans la surépaisseur de la tige principale les valves à clapet sont indépendantes l'une de l'autre et disposées de part et d'autre des joints assurant l'étanchéité lors du déplacement du piston principal dans le cylindre, chacune de ces valves mettant directement en communication l'une des deux chambres du cylindre avec le réservoir interne à la tige principale, dans laquelle est monté coulissant un manchon, en bout duquel est porté le piston secondaire et dans lequel est montée coulissante une tige secondaire, sollicitée par les moyens élastiques, également susceptible de coulisser dans la tige principale, et dont la position vis-à-vis de cette dernière témoigne de l'état de remplissage du réservoir pressurisé.

De préférence, les moyens élastiques sont constitués par une pluralité de ressorts montés bout-à-bout et reliés les uns aux autres par l'intermédiaire de coulisseaux, dont l'un au moins coulisse à l'intérieur du manchon, dont au moins un autre coulisse autour de la tige secondaire, ce dernier ou l'un de ces derniers étant solidaire de la tige secondaire, dont les déplacements vis-à-vis de la tige principale sont démultipliés par rapport aux déplacements du piston secondaire vis-à-vis de la tige principale. De la sorte, on peut permettre au piston secondaire d'effectuer une grande course à l'intérieur de la tige principale, tout en limitant la course de la tige secondaire vis-à-vis de la tige principale à une faible valeur, ce qui ne contraint pas à augmenter la longueur totale du dispositif, d'autant plus que la tige secondaire peut alors, du fait du montage des ressorts, s'escamoter dans la tige principale. L'invention sera mieux comprise à l'aide d'un exemple particulier de réalisation que sera à présent décrit, à titre non limitatif, en référence aux figures en annexe, dans lesquelles:

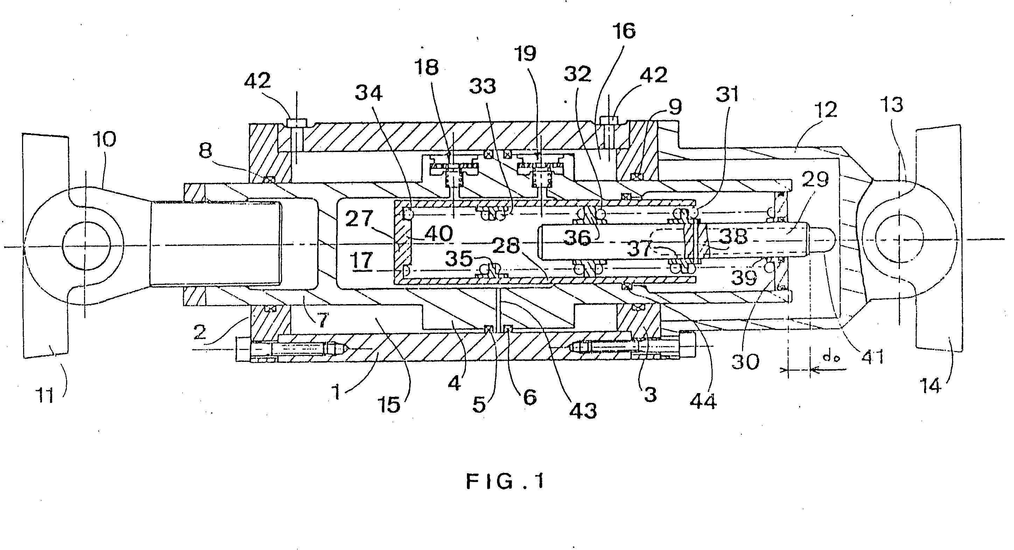

—la figure 1 représente, en coupe axiale, un dispositif hydraulique de freinage dans la position qu'il occupe entre un support et un élément de conduite de fluide d'une centrale thermique ou nucléaire, laquelle n'est pas en activité, la température ambiante étant d'environ 20°C et le dispositif ne présentant pas de fuite hydraulique.

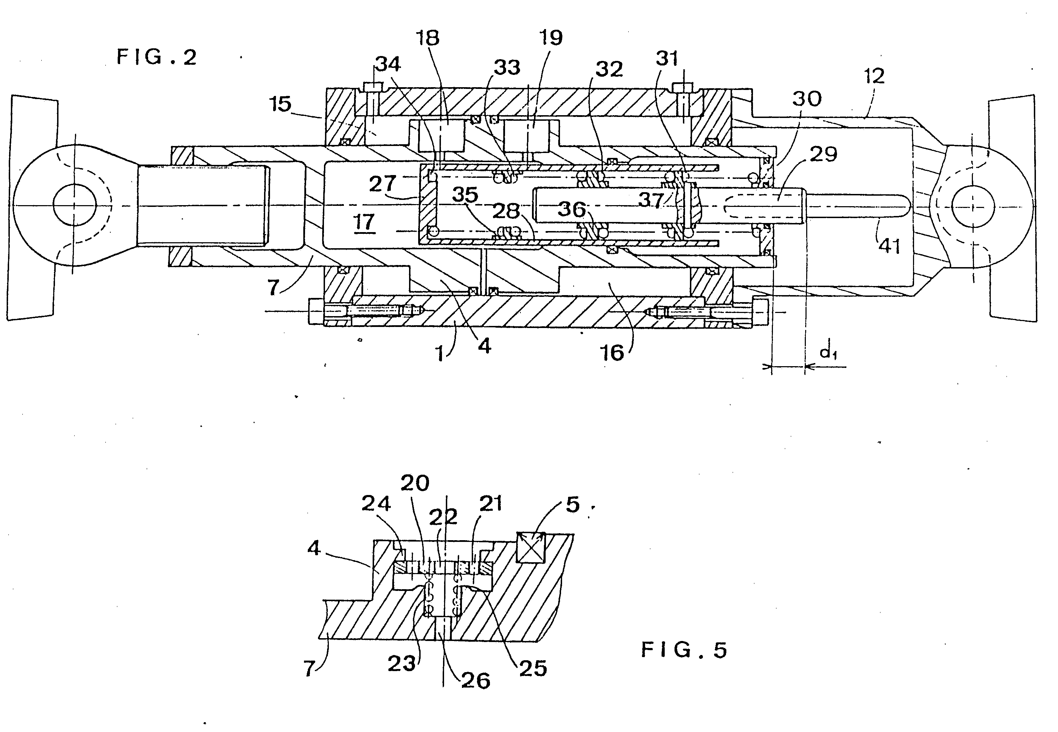

— la figure 2 représente, de façon analogue, le dispositif selon la figure 1 dans la position qu'il occupe en régime de croisière, la centrale étant en activité, et la température ambiante étant de 50 à 80°C environ du fait de la circulation de vapeur à haute température dans l'élément de conduite, qui s'est, en conséquence, dilaté et déplacé sous l'effet de la dilatation d'autres éléments avals ou amonts de conduite, perpendiculaires à l'élément considéré, le dispositif ne présentant pas de fuite.

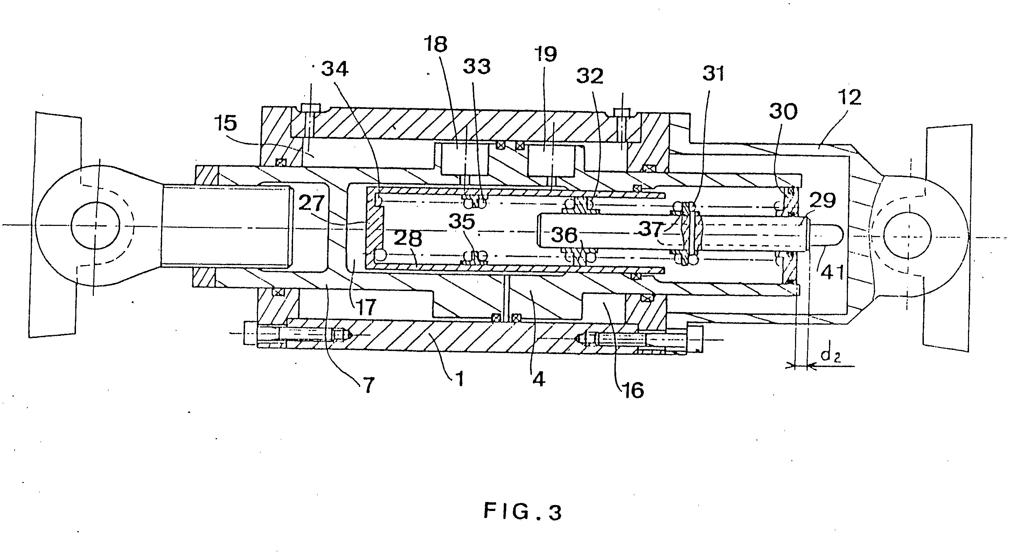

—la figure 3 représente, de façon analogue, le dispositif selon les figures 1 et 2, la centrale ayant été arrêtée, la température ambiante étant revenue à 20°C environ, mais des fuites de fluide hydraulique s'étant produites.

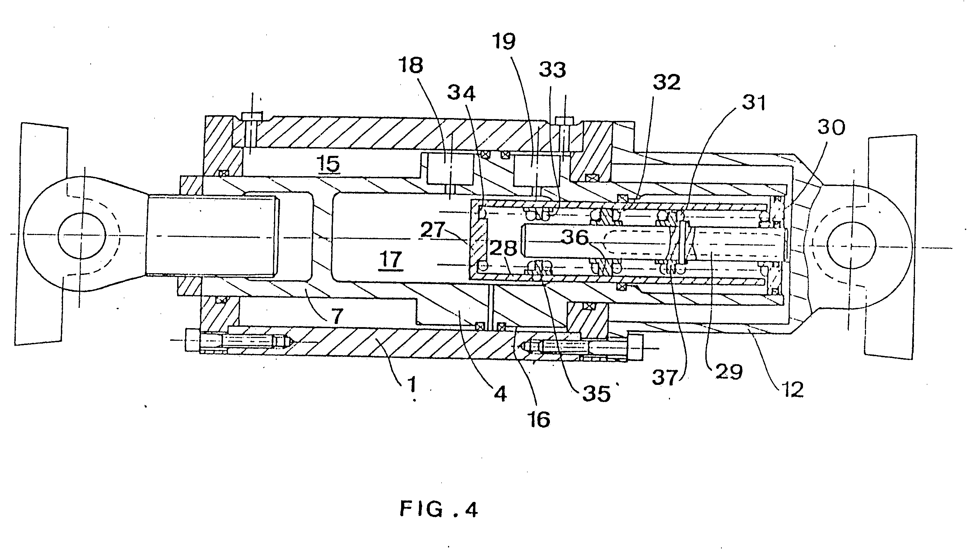

—la figure 4 représente, de façon analogue, le dispositif selon les figures 1 à 3, dans la position qu'il occupe suite à un accident tel qu'une rupture de conduite, la température ambiante étant de l'ordre de 150°C à 300°C du fait de la libération du fluide à haute température circulant dans la conduite rompue.

Enfin, la figure 5 représente, à une autre échelle, une vue en coupe de l'une des deux valves à clapet équipant le dispositif selon les figures 1 à 4. En référence aux figures 1 à 4, le dispositif hydraulique de freinage comprend un cylindre 1, fermé à ses deux extrémités par des fonds 2 et 3 vissés sur le cylindre 1, et dans lequel un piston principal 4 est monté coulissant avec étanchéité, par le fait des deux joints d'étanchéité à lèvres 5 et 6 portés sur la périphérie du piston 4, lequel est constitué par une surépaisseur d'une tige principale 7, traversant les fonds 2 et 3 avec étanchéité grâce aux joints 8 et 9, et dont la partie centrale, présentant et entourant la surépaisseur conformée en piston principal 4, est susceptible de coulisser dans le cylindre 1, tandis que dans l'une des extrémités de la tige principale 7, présentant un alésage, est vissée une attache 10 d'articulation du dispositif sur une semelle 11 solidarisée à l'élément de conduite de vapeur, et que l'autre extrémité de la tige principale 7 est entourée d'une enveloppe de protection 12, vissée par l'une de ses extrémités sur le fond 3 et le cylindre 1, et dont l'autre extrémité est conformée en attache 13 d'articulation du dispositif sur une semelle 14 solidarisée au support, par exemple constitué par un ouvrage de génie civil tel qu'un mur ou une paroi.

Le piston principal 4 et la tige principale 7 définissent avec le cylindre 1, deux chambres 15 et 16 de fluide hydraulique, de même section efficace, qui sont, chacune, en communication avec une chambre 17 interne à la tige principale 7, qui est creuse, par l'intermédiaire de l'une de deux valves à clapet 18 et 19, installée dans la surépaisseur de la tige principale 7 conformée en piston principal 4, de part et d'autre des deux joints à lèvres 5 et 6. Les valves 18 et 19 sont identiques et, comme cela apparaît sur la figure 5, comportent, chacune, un clapet 20 se présentant sous la forme d'un disque percé, d'une part, d'une pluralité d'orifices 21 régulièrement répartis à sa périphérie, et, d'autre part, d'un orifice central 22.

Un ressort 23 applique le clapet 20 contre une butée annulaire 24, ménagée sur le pourtour d'un alésage débouchant dans l'une des chambres 15 ou 16, et les déplacements du clapet 20 à l'encontre du ressort 23 sont limités par un siège 25, constitué sous la forme d'une butée annulaire centrale entourant un puits logeant le ressort 23 et débouchant, par le perçage 26, dans la chambre 17. Ces valves 18 et 19 sont d'un type bien connue en soi, restant en position ouverte, c'est-à-dire avec le clapet 20 appliqué par le ressort 23 contre la butée 24, lorsque la valve n'est pas traversée de fluide hydraulique en mouvement, lorsque le fluide hydraulique traverse la valve en venant de la chambre interne 17, quelle que soit sa vitesse de circulation, puisqu'il peut librement s'écouler par les orifices 21 et l'orifice central 22, et, enfin, lorsque le fluide hydraulique s'écoule, à faible vitesse vers la chambre 17, alors que les valves se mettent en position fermée, c'est-à-dire avec le clapet 20 appliqué à l'encontre du ressort 23, contre la butée 25, lorsque le fluide hydraulique est poussé à s'écouler à grande vitesse vers la chambre 17. Dans leur position fermée, les valves 18 et 19 introduisent un freinage de la circulation du fluide hydraulique par laminage de ce dernier au travers de l'orifice central 22. De par le montage des valves 18 et 19 dans le piston 4, symétriquement de part et d'autre des joints d'étanchéité 5 et 6, le fluide hydraulique peut s'écouler librement de l'une à l'autre des deux chambres 15 et 16 du cylindre 1, en traversant l'une des valves 18 et 19, la chambre 17, puis l'autre valve, sans fermer aucune des deux valves 18 et 19, pour tout déplacement lent de la tige principale 7, et donc du piston principal 4, dans le cylindre 1. Par contre, l'une ou l'autre des valves 18 et 19, selon le sens du déplacement de la tige principale 4 dans le cylindre 1, se ferme et assure le freinage de la circulation du fluide hydraulique par laminage de ce dernier au travers de l'orifice central 22 de son clapet 20, afin de limiter la vitesse de déplacement de la tige principale 7 dans le cylindre 1, lorsque des efforts anormalement élevés se développent sur l'élément de conduite relié à la tige 7 et tendent à éloigner ou à rapprocher à grande vitesse cet élément de conduite du support, et enfin d'opposer une réaction de blocage aux déplacements de la tige 7 se développant sous l'effet d'accélérations importantes, à la suite de chocs ou de vibrations subis par l'élément de conduite. La chambre 17, interne à la tige principale 7, et par laquelle transite le fluide hydraulique circulant de l'une à l'autre des deux chambres 15 et 16 du cylindre 1, est délimitée par un piston secondaire 27 porté en bout d'un manchon 28, monté coulissant avec étanchéité à l'intérieur de la tige principale 7 grâce au joint d'étanchéité 44. Une tige secondaire 29 est, de plus, montée simultanément coulissante dans le manchon 28 et coulissante dans la tige principale 7, dont l'extrémité entourée par l'enveloppe de protection 12 est obturée par un fond 30, que la tige secondaire 29 traverse. Quatre ressorts de compression 31, 32, 33 et 34, montés bout-à-bout, en série, entre le fond 30 de la tige principale 7 et le piston 27 du manchon 28, assurent la pressurisation du fluide hydraulique contenu dans la chambre 17, qui constitue un réservoir pressurisé de fluide hydraulique pour les chambres 15 et 16 du cylindre 1, permettant d'alimenter ces dernières, sous l'action du piston 27 sollicité par les ressorts, pour compenser les pertes en fluide hydraulique dues aux fuites que peuvent présenter les joints 8 et 9. Simultanément, le réservoir pressurisé ainsi réalisé constitue un accumulateur des dilatations du fluide hydraulique contenu dans le dispositif. En effet, l'augmentation du volume de ce fluide, consécutive à une augmentation de la température ambiante, provoque le déplacement du piston 27 et du manchon 28 contre les ressorts 31, 32, 33 et 34. Les ressorts 33 et 34 coopèrent l'un avec l'autre par l'intermédiaire d'un coulisseau 35, monté coulissant par sa base à l'intérieur du manchon 28, tandis que les ressorts 32 et 33 coopèrent l'un avec l'autre par l'intermédiaire d'un coulisseau 36, monté coulissant par sa base autour de la tige secondaire 29 et par sa tête à l'intérieur du manchon 28, de sorte qu'il guide la tige secondaire 29 dans ses déplacements vis-à-vis du manchon 28, et que les ressorts 31 et 32 coopèrent au moyen d'un coulisseau 37 immobilisé sur la tige secondaire 29 par une goupille 38, le ressort 31 étant également positionné contre le fond 30 au moyen d'une couronne annulaire 39, solidaire du fond 30, et traversé par la tige secondaire 29, alors que le ressort 34 est positionné contre le piston 27 autour d'un disque 40 solidaire de ce piston 27. Tout déplacement du piston secondaire 27, ou du manchon 28, vis-à-vis de la tige principale 7, témoignant d'une variation de l'état de remplissage de la chambre 17, donne naissance, avec démultiplication, à un déplacement correspondant de la tige secondaire 29 vis-à-vis de la tige principale 7, ou du fond 30 de cette dernière, par le fait du montage des ressorts 31 à 34. Si ces ressorts 31 à 34 sont identiques, on obtient un rapport de démultiplication de quatre, le déplacement de la tige secondaire 29 vis-à-vis de la tige principale 7 étant quatre fois plus petit que le déplacement du piston 27 vis-à-vis de la tige principale 7, du fait que le déplacement de la tige secondaire 29 ne correspond qu'à la variation de longueur du ressort 31, alors que le déplacement du piston 27 correspond à la somme des variations de longueur des ressorts 31, 32, 33 et 34, lesquelles sont identiques. Des lumières axiales telles que 41 ayant été pratiquées dans l'enveloppe de protection 12, et un étalonnage en fonction de la course de la tige principale 7 dans le cylindre 1, ainsi qu'en fonction de la course du piston secondaire 27 dans la tige principale 7, suite aux dilatations du fluide hydraulique dues aux variations de température, ayant été matérialisé, d'une part, par des graduations pratiquées le long d'un bord axial des lumières 41, d'autre part, par une abaque indiquant de combien l'extrémité de la tige secondaire 29 doit sortir du fond 30 de la tige principale 7, à une température ambiante donnée, il sera alors aisé à un observateur de constater de l'extérieur du dispositif, lors d'un contrôle, si la tige principale 7 et le piston 4 sont en butée dans le cylindre 1 lorsque le fonctionnement de la centrale est interrompu, ce qui ne procurerait pas de course de freinage lors du fonctionnement de la centrale, et si le dispositif a présenté des fuites de fluide hydraulique. Dans ce dernier cas, on pourra recharger le dispositif en fluide hydraulique à l'aide des valves de remplissage 42.

Enfin, un perçage 43, pratiqué dans le piston principal 4, débouchant, d'une part, dans la chambre 17, et, d'autre part, contre le cylindre 1, entre les joints à lèvres 5 et 6, permet d'équilibrer les pressions de part et d'autre des joints 5 et 6.

Le dispositif, dont la structure vient d'être décrite, fonctionne de la manière suivante à partir de la configuration du dispositif représentée sur la figure 1, pour laquelle la température ambiante est 20°C, dans une centrale inactive, le dispositif ne présentant pas de fuite, ce qui correspond à un enfoncement des trois-quart de la course de la tige 7 dans le cylindre 1, et à une certaine distance $d_0$ de l'extrémité de la tige 29 hors du fond 30 de la tige 7, si la centrale est mise en activité, de sorte que la température ambiant s'établisse à 60°C, et que l'élément de conduite fixé à la tige 7 soit éloigné du support fixé au cylindre 1, du fait de la dilatation d'éléments adjacents de conduite, perpendiculaires à l'élément considéré, le dispositif vient adopter la configuration selon la figure 2, l'enfoncement de la tige 7 dans le cylindre n'étant plus que d'un quart de la course, la sortie de la tige 7 s'étant effectuée sans freinage hydraulique, du fait des déplacements lents résultant de la montée progressive de la température ambiante, et les dilatations du fluide hydraulique étant absorbées par le réservoir pressurisé, dont le piston 27 est repoussé contre les ressorts 31 à 34 sur une course $C_1$, l'extrémité de la tige 29 hors de la tige 7 venant à une distance $d_1$ du fond 30 telle que $d_1 - d_0 = C_1/4$.

Le fonctionnement de la centrale ayant été interrompu, et la température ambiante étant revenue à 20°C, on peut alors procéder à un contrôle. En examinant, par les lumières 41, les positions occupées par la tige 7 et par l'extrémité de la tige 29, on constate par lecture sur les graduations des bords des lumières 41, que l'enfoncement de la tige 7 est à nouveau des trois-quart de la course dans le cylindre 1 (voir figure 3), mais, par contre, que l'extrémité de la tige 29 hors de la tige 7 n'est plus à une distance $d_0$ du fond 30, correspondant à une température de 20°C. Cette distance $d_2$ est inférieure à $d_0$, ce qui montre le piston 27 s'est déplacé dans la tige 7 d'une course $C_2$, telle que $C_2 = 4 (d_0 - d_2)$, sous l'effet des ressorts 31 à 34, pour compenser des fuites que se sont produites en période de fonctionnement de la centrale, et qui, sur les figures, atteignent les deux tiers du volume initial de réserve.

Le dispositif ayant été rechargé en fluide hydraulique par les valves 42, jusqu'à ce que l'extrémité de la tige 29 hors de la tige 7 se retrouve à une distance $d$ du fond 30 correspondant sur l'abaque, à la température ambiante du moment, par exemple $d_0$ si cette température est 20°C comme montré sur la figure 1, la centrale peut à nouveau être mise en service et le dispositif reprend là position qu'il occupe sur la figure 2. A partir de cette position, si un élément de conduite adjacent vient à se rompre, ce qui développe des efforts anormalement élevés tendant à rapprocher à grande vitesse l'élément de conduite porté par la tige 7 vers le support portant le cylindre 1, on obtient un freinage hydraulique limitant la vitesse de ce déplacement par fermeture de la valve à clapet 19, qui lamine le fluide hydraulique passant de la chambre 16 vers la chambre 17, jusqu'à ce que le piston 4 soit en butée dans le cylindre 1. Simultanément, la température ambiante s'élève jusqu'à une température de l'ordre de 200°C, sous l'effet du fluide à haute température qui s'échappe de la conduite rompue. Les dilatations du fluide hydraulique qui en résultent sont absorbées par déplacement du piston 27 contre les ressorts 31 à 34, le manchon 28 venant pratiquement contre le fond 30, cependant que la tige 29, dont l'extrémité située hors de la tige 7 s'appuie contre le fond de l'enveloppe 12, vient presque totalement se loger dans le manchon 28, sans gêner les déplacements de la tige 7 ni du manchon 28.

Le dispositif selon l'invention présente ainsi l'avantage de disposer de sa propre réserve de fluide hydraulique, pour compenser les pertes, de pouvoir accumuler les dilatations d'origine thermique de ce fluide, et d'être muni d'un indicateur de fuites dont la présence n'entraîne aucun allongement qui lui soit propre du dispositif.

Le dispositif hydraulique de freinage selon l'invention sera avantageusement utilisé chaque fois qu'il conviendra de stabiliser dynamiquement une charge soumise à des chocs et vibrations dans un milieu dont la température ambiante est susceptible de grandes variations.

**Revendications**

1. Dispositif hydraulique de freinage pour une charge soumise à des chocs et vibrations, destiné à être installé entre la charge et un support, et susceptible d'être solidarisé à l'un des éléments que constituent la charge et le support par un cylindre (1) traversé avec étancheité par une tige principale coulissante (7), susceptible d'être solidarisée à l'autre des éléments, charge ou support, et dont la partie interne au cylindre présente une surépaisseur conformée en piston principal (4), coulissant avec étanchéité dans le cylindre (1), et définissant, avec ce dernier, deux chambres (15 et 16) remplies d'un fluide hydraulique pouvant passer de l'une à l'autre des deux chambres au travers de deux valves à clapet (18 et 19) ne freinant pas la circulation du fluide à faible vitesse, et dont l'une ou l'autre, selon le sens du déplacement de la tige principale (7) dans le cylindre (1), assure le freinage de la circulation du fluide par laminage de ce dernier, pour limiter la vitesse de déplacement de la tige (7) dans le cylindre (1), sous l'action d'efforts anormalement élevés sur la charge, et opposer une réaction de blocage au déplacements se développant sous l'effet d'accélérations importantes, à la suite de chocs ou vibrations, la tige principale (7) étant creuse et renfermant un réservoir de fluide hydraulique (17) en communication avec chacune des chambres (15 et 16) du cylindre (1) au travers de l'une des valves à clapet (18 et 19), qui sont disposées dans la surépaisseur de la tige principale (7), un piston secondaire (27), monté coulissant dans la tige principale (7), et sollicité par des moyens élastiques, prenant appui contre la tige principale (7), pour assurer la pressurisation du réservoir (17), lequel constitue simultanément un accumulateur des dilatations du fluide hydraulique, caractérisé en ce que, dans la surépaisseur de la tige principale (7), les valves à clapet (18 et 19) sont indépendantes l'une de l'autre et disposées de part et d'autre des joints (5 et 6) assurant l'étanchéité lors du déplacement du piston principal (4) dans le cylindre (1), chacune de ces valves (18 et 19) mettant directement en communication l'une des deux chambres (15 et 16) du cylindre (1) avec le réservoir interne (17) à la tige principale (7), dans laquelle est monté coulissant un manchon (28), en bout duquel est porté le piston secondaire (27) et dans lequel est montée coulissante une tige secondaire (29), sollicitée par les moyens élastiques, également susceptible de coulisser dans la tige principale (7), et dont la position vis-à-vis de cette dernière témoigne de l'état de remplissage du réservoir pressurisé (17).

2. Dispositif selon la revendication 1, caractérisé en ce que les moyens élasriques sont constitués par une pluralité de ressorts (31, 32, 33 et 34) montés bout-à-bout et reliés les uns aux autres par l'intermédiaire de coulisseaux (35, 36, 37), dont l'un, au moins (35), coulisse à l'intérieur du manchon (28), dont au moins un autre (36, 37) coulisse autour de la tige secondaire, ce dernier ou l'un de ces derniers (37) étant solidaire de la tige secondaire (29), dont les déplacements vis-à-vis de la tige principale (7) sont démultipliés par rapport aux déplacements du piston secondaire (27) vis-à-vis de la tige principale (7).

3. Dispositif selon l'une des revendications 1 et 2, caractérisé en ce que l'une des extrémités de la tige principale (7), par laquelle cette dernière n'est pas solidarisée à l'un des éléments, charge ou support, est obturée par un fond (30), contre lequel s'appuient les moyens élastiques (31, 32, 33, 34), et qui est traversé par la tige secondaire (29), dont l'extrémité externe à la tige principale (7) occupe, vis-à-vis de cette dernière, une position pouvant être observée par au moins une lumière (41) ménagée dans une enveloppe de protection (12) fixée au cylindre (1), par laquelle ce dernier est solidarisé à l'autre élément, et qui entoure cette extrémité de la tige principale (71).

4. Dispositif selon l'une des revendications 1 à 3, caractérisé en ce qu'un canal (43) débouche, d'un côté, dans le réservoir (17), et, de l'autre, entre les joints d'étanchéité (5 et 6) du piston principal (4).

## Claims

1. Hydraulic braking device for a load subjected to shocks and vibrations, designed to be installed between the load and a support, and capable of being linked to one of the elements making up the load and the support by a cylinder traversed in a sealed manner by a main sliding rod, capable of being linked to the other of the elements, load or support, and whose part inside the cylinder has an extra thickness shaped into a main piston, sliding in a sealed manner in the cylinder, and defining, with the latter, two chambers filled with a hydraulic fluid capable of passing from one of the two chambers to the other through two plug valves not braking the circulation of fluid at low speed, and one or the other of which, depending on the direction of movement of the main rod in the cylinder, provides the braking of fluid circulation by throttling the fluid to limit the movement speed of the rod in the cylinder, under the action of abnormally high forces on the load, and to oppose a blocking reaction to the movements developing under the effect of high accelerations following shocks or vibrations, the main rod being hollow and enclosing the hydraulic fluid reservoir in communication with each of the chambers of the cylinder through one of the plug valves, which are placed in the extra thickness of the main rod, a secondary piston mounted slidably in the main rod, and loaded by elastic means, bearing against the main rod, to ensure the pressurization of the reservoir, which also constitutes a hydraulic fluid expansion accumulator, characterized in that, in the extra thickness of the main rod, the plug valves are independent of each other and placed on each side of the packing used for sealing during the movement of the main piston in the cylinder, each of these valves placing in direct communication one of the two chambers of the cylinder with the internal reservoir of the main rod, in which is mounted slidably a sleeve, at the end of which is carried the secondary piston and in which is mounted slidably a secondary rod, loaded by the elastic means, also capable of sliding in the main rod and whose position in relation to the latter indicates the filling level of the pressurized reservoir.

2. Device according to claim 1, characterized in that the elastic means are made up of a plurality of springs mounted end-to-end and connected to each other by means of slides, at least one of which slides within the sleeve, and at least another of which slides around the secondary rod, and the slide(s) being integral with the secondary rod, the movements of which with respect to the main rod have a stepdown reduction in relation to the movements of the secondary piston with respect to the main rod.

3. Device according to either of claims 1 or 2, characterized in that one of the ends of the main rod, at which the rod is not connected to one of the elements, load or support, is covered by a head against which bear the elastic means and which is traversed by the secondary rod, whose end outside of the main rod occupies, with respect to the latter, a position capable of being observed through at least one opening made in a protective casing fixed to the cylinder, through which the latter is connected to the other element, and which surrounds this end of the main rod.

4. Device according to any of claims 1 through 3, characterized in that a channel comes out, on one side, in the reservoir and, on the other, between the packings of the main piston.

**Patentansprüche**

1. Hydraulische Dämpfungseinrichtung für eine Stößen und Schwingungen unterworfene Last zum Einbau zwischen der Last und einer Abstützung, wobei die Einrichtung mit einem der die Last bzw. die Abstrützung darstellenden Elemente durch einen Zylinder (1) verbindbar ist, der abgedichtet von einer Hauptgleitstange, welche mit dem anderen der Elemente Abstützung und Last verbindbar ist, durchsetzt ist, deren zylinderinnerer Teil eine einen Hauptkolben (4) bildende Verdickung aufweist, die abgedichtet im Zylinder (1) gleitbeweglich ist und mit dem letzteren zwei Kammern (15 und 16) begrenzt, die mit einem Hydraulikfluid gefüllt sind, welches voin einer der Kammern zur anderen über zwei Klappenventile (18 und 19) strömen kann, die die Zirkulation des Fluids mit geringer Geschwindigkeit nicht bremsen und von denen das eine oder das andere — je nach der Bewegungsrichtung der Hauptgleitstange (7) im Zylinder (1) — eine Bremsung der Fluidzirkulation durch deren Laminierung bewirkt, um die Bewegungsgeschwindigkeit der Stange (7) im Zylinder (1) unter der Einwirkung anormal hoher Kräfte auf die Last zu begrenzen und um einer sich unter der Einwirkung hoher Beschleunigungen infolge Stößen oder Schwingungen entwickelnden Bewegungsblockierreaktion entgegenzuwirken, wobei die Hauptgleitstange (7) hohl ist und ein Hydraulikfluidreservoir (17) umschließt, das mit jeder der Kammern (15 und 16) des Zylinders (1) über eines der Klappenventile (18 und 19) kommuniziert, die in der Verdickung der Hauptgleitstange (7) angeordnet sind, wobei ein Sekundärkolben (27) gleitbeweglich in der Hauptgleitstange (7) montiert ist und unter Vorspannung sich an der Hauptgleitstange (7) abstützender elastischer Mittel steht, um das Reservoir (17) unter Druck gesetzt zu halten, welches Reservoir zugleich ein Ausdehnungsgefäß für das Hydraulikfluid bildet, dadurch gekennzeichnet, daß in der Verdickung der Hauptgleitstange (7) die Klappventile (18 und 19) voneinander unabhängig und beidseits von Dichtungen (5 und 6) angeordnet sind, die die Abdichtung während der Bewegung des Hauptkolbens (4) im Zylinder (1) sicherstellen, wobei jedes der Ventile (18 und 19) eine der beiden Kammern (15 und 16) des Zylinders (1) direkt mit dem inneren Reservoir (17) der Hauptgleitstange (7) in Kommunikation bringt, in welcher gleitbeweglich eine Hülse (28) montiert ist, an deren Ende der Sekundärkolben (27) abgestützt ist und in der gleitbeweglich eine Sekundärstange (29) montiert ist, vorgespannt von ebenfalls in der Hauptgleitstange (7) gleitbeweglichen elastischen Mitteln, deren Position gegenüber der Hauptgleitstange den Füllzustand des unter Druck stehenden Reservoirs (17) anzeigt.

2. Einrichtung nach Anspruch 1, dadurch gekennzeichnet, daß die elastischen Mittel von einer Mehrzahl von Federn (31, 32, 33 und 34) gebildet sind, die Ende an Ende montiert sind und miteinander über Gleitstücke (35, 36, 37) verbunden sind, von denen mindestens eines (35) im Inneren der Hülse (28) gleitet und mindestens eine weiteres außerhalb (36, 37) der Sekundärstange gleitet, wobei das letztere bzw. eines der letzteren mit der Sekundärstange (29) verbunden ist, deren Bewegungen relativ zur Hauptgleitstange (7) im Verhältnis zu den Bewegungen des Sekundärkolbens (27) gegenüber der Hauptgleitstange (7) demultipliziert werden.

3. Einrichtung nach einem der Ansprüche 1 und 2, dadurch gekennzeichnet, daß eines der Enden der Hauptgleitstange (7), mittels welchem diese nicht mit einem der Elemente Last oder Abstützung verbunden ist, durch einen Boden (30) verschlossen ist, an dem sich die elastischen Mittel (31, 32, 33, 34) abstützten und der von der Sekundärstange (29) durchsetzt ist, deren außerhalb der Hauptgleitstange (7) befindliches Ende relativ zu der letzteren eine durch mindestens eine Sichtöffnung (41) beobachtbare Position einnimmt, welche Sichtöffnung in eine am Zylinder (1) befestigte Schutzverkleidung (12) eingebracht ist, mittels welcher der Zylinder am anderen Element befestigt ist und welche dieses Ende der Hauptgleitstange (7) umschließt.

    4. Einrichtung nach einem der Ansprüche 1 bis 3, dadurch gekennzeichnet, daß ein Kanal (43) mit einem Ende in das Reservoir (17) mündet und mit dem anderen Ende zwischen den Dichtungen (5 und 6) des Hauptkolbens (4) mündet.

FIG.1

FIG.2

FIG.5

FIG.3

0 013 227

FIG .4

0 013 227